# DEMANDE DE BREVET EUROPEEN

(11) **EP 1 507 180 A1**
(43) Date de publication de la demande: **16.02.2005**
(21) Numéro de dépôt: 03018267.9
(22) Date de dépôt: 11.08.2003
(51) Int. Cl.: G04B 37/22, C04B 35/115

(54) **Elément de fermeture ou d'habillage transparent et inrayable pour une montre et montre munie d'un tel élément**

(71) Demandeur: Montres Rado S.A., 2543 Lengnau b. Biel (CH)
(72) Inventeur: Christian, Verdon, CH-1034 Boussens (CH); Bach, Michael, 2500 Biel (CH)
(74) Mandataire: Thérond, Gérard Raymond

(57) **Abrégé**

La présente invention concerne un élément de fermeture ou d'habillage transparent et inrayable pour une montre (1), cet élément étant réalisé par frittage d'une pièce brute ayant une forme générale semblable à celle de l'élément de fermeture (2, 6, 14) ou d'habillage (8, 12), ledit élément étant caractérisé en ce que la pièce brute est formée d'une poudre d'un matériau céramique comprenant essentiellement de l'oxyde d'aluminium Al₂O₃ dont la taille des particules est submicrométrique, et en ce que ledit élément de fermeture ou d'habillage est transparent vis-à-vis des longueurs d'onde du spectre optique visible.

## Description

La présente invention concerne un élément de fermeture transparent et inrayable pour une montre, et en particulier un verre de montre ou un fond ayant un faible prix de revient indépendamment de la complexité de sa forme et ayant une grande dureté.

La présente invention concerne également un élément d'habillage transparent et inrayable pour une montre, et en particulier une boîte de montre ou un maillon de bracelet ayant un faible prix de revient indépendamment de la complexité de sa forme et ayant une grande dureté.

La présente invention concerne enfin une montre comprenant un élément de fermeture ou d'habillage du genre susmentionné.

Les éléments de fermeture transparents de boîtes de montres tels que les verres destinés à la protection des cadrans et des aiguilles ou analogues et les fonds transparents pour la protection des mouvements sont réalisés le plus souvent soit en un matériau synthétique, soit en verre minéral en raison du prix de revient relativement faible de ces matériaux.

La dureté de ces matériaux détermine bien entendu leur résistance aux rayures.

Pour fixer les idées, des éléments de fermeture transparents réalisés en un matériau synthétique tel que le Plexiglas® présentent une dureté Vickers d'environ 100, tandis que de tels éléments de fermeture réalisés en verre minéral présentent une dureté Vickers d'environ 900.

L'expérience a montré que les éléments de fermeture réalisés en Plexiglas@ ou en verre résistent mal aux rayures engendrées par certains agents très durs tels que la silice contenue dans la poussière, le marbre ou encore le sable omniprésent dans notre environnement.

Même si le verre minéral résiste mieux à de telles agressions que les matériaux synthétiques, il n'en résulte par moins que l'aspect esthétique des verres ou fonds de montres se détériore assez rapidement en raison des rayures.

Pour éviter ces inconvénients, on a eu recours au saphir ou corindon artificiel pour fabriquer des verres de montres et des fonds transparents, la dureté de cette matière s'approchant de celle des matières les plus dures présentes dans l'environnement.

Les éléments de fermeture transparents en saphir résistent très bien aux agressions des agents extérieurs mais présentent toutefois l'inconvénient majeur d'être longs, complexes et difficiles à fabriquer et d'avoir, par conséquent, un prix de revient très élevé qui limite considérablement leur utilisation. A titre d'illustration, 80 % du coût de la fabrication des "poires" de saphir à partir desquelles sont découpées les plaques qui, après de nombreuses opérations d'usinage et de polissage ultérieures, formeront ces éléments de fermeture transparents pour boîtes de montres, est représenté par les besoins en énergie électrique de la fabrication de ces poires. En outre, une usine de taille moyenne de fabrication de "poires" de saphir artificiel consomme annuellement autant d'électricité qu'une ville d'environ 50'000 habitants.

On comprend donc aisément qu'il est nécessaire, compte tenu des préoccupations actuelles grandissantes en matière d'économie d'énergie et des coûts de fabrication, de trouver une solution alternative plus économique à l'utilisation du saphir artificiel pour réaliser des éléments de fermeture de boîtes de montres ayant une grande résistance aux rayures et destinés à une large gamme de montres.

La Demanderesse s'est aperçue au cours de l'étude de nouvelles solutions que l'utilisation de l'oxynitrure d'aluminium ou de l'oxyde d'yttrium fritté pour la réalisation d'éléments de fermeture transparents tels que des verres était particulièrement avantageuse car les verres réalisés remplissaient les conditions requises pour la réalisation d'éléments de boîtes de montres inrayables tant du point de vue économique que du point de vue de leur mise en oeuvre.

Une telle solution a fait l'objet de la demande de brevet EP 0 717 328 au nom de la Demanderesse qui se rapporte à un élément de fermeture transparent et inrayable de boîte de montre réalisé par frittage d'une pièce brute ayant une forme générale semblable à celle de l'élément recherché, cette pièce brute étant formée d'une poudre ou d'un mélange de poudres comprenant essentiellement de l'oxynitrure d'aluminium et/ou de l'oxyde d'yttrium.

Un élément de fermeture du type décrit dans la demande de brevet susmentionnée avait pour avantage d'être transparent dans le spectre visible et de présenter un coefficient d'absorption dans le spectre visible ne dépassant pas 30 %. Par conséquent, la fabrication compliquée et coûteuse du saphir artificiel ainsi que sa transformation, non moins complexe, en éléments de fermeture transparents de boîtes de montres tels que des verres ou des fonds ont été remplacées par une simple opération de mise en forme quasi-finale de l'élément désiré, par exemple dans un moule, suivie d'une opération de frittage et d'une opération de polissage.

On a remarqué que, de façon avantageuse, la production d'éléments de fermeture à l'aide de ces matériaux s'effectuait sans pertes de matière importantes, ce qui a conduit à une diminution du coût global de production de ces éléments.

En effet, la qualité des éléments de fermeture réalisés par frittage de poudres d'oxynitrure d'aluminium ou d'oxyde d'yttrium était si grande qu'il n'était pas nécessaire de procéder à des usinages de reprise pour obtenir la forme finale voulue dudit élément de fermeture et que seule une opération de polissage diamant finale suffisait.

A l'usage, on s'est néanmoins rendu compte qu'il fallait trouver un compromis entre la résistance mécanique et la transparence des éléments de fermeture pour boîtes de montres réalisés en poudre d'oxynitrure d'aluminium ou d'oxyde d'yttrium. En effet, plus la granulométrie des poudres utilisées est faible, meilleure est la résistance mécanique de la pièce frittée résultante. Par contre, les phénomènes de diffusion de la lumière au niveau des nombreux joints de grains font perdre de sa transparence à la pièce frittée. Inversement, plus la granulométrie des poudres utilisées est grande, meilleure est la transparence de la pièce frittée résultante. Par contre, la pièce frittée est mécaniquement moins résistante.

Dans le cas des poudres d'oxynitrure d'aluminium ou d'oxyde d'yttrium, le choix s'est donc porté sur une taille de grains d'environ 150 microns qui garantissait que les éléments de fermeture, notamment les verres, pour boîtes de montres présentaient une transparence suffisante.

Malheureusement, pour obtenir, avec une telle taille de grains, une résistance mécanique analogue à celle du saphir artificiel, il a fallu augmenter l'épaisseur des éléments de fermeture, ce qui a nuit à leur transparence. En outre, on a constaté qu'en raison des dimensions relativement importantes des grains, les pièces frittées étaient difficiles à polir. Enfin, on n'est jamais parvenu à réaliser des pièces à facettes ou a angles aigus, car les arêtes constituaient des zones d'amorce de fissures.

Par conséquent, l'homme du métier n'est jamais parvenu à atteindre un compromis satisfaisant entre résistance mécanique et transparence aux longueurs d'onde de la lumière visible des éléments de fermeture pour boîtes de montres obtenus par frittage de poudres d'oxynitrure d'aluminium ou d'oxyde d'yttrium, de sorte qu'il s'est peu à peu détourné de cette solution.

En poursuivant néanmoins ses recherches, la Demanderesse a découvert avec surprise qu'en utilisant une poudre d'alumine dont la taille des particules est submicrométrique, on obtenait des éléments de fermeture ou d'habillage pour montre d'une résistance mécanique et d'une transparence aux longueurs d'onde de la lumière visible inégalées à ce jour.

La présente invention a donc précisément pour objet un élément de fermeture ou d'habillage transparent et inrayable pour une montre, cet élément étant réalisé par frittage d'une pièce brute ayant une forme semblable à celle de l'élément de fermeture ou d'habillage, ledit élément étant caractérisé en ce que la pièce brute est formée d'une poudre d'un matériau céramique comprenant essentiellement de l'oxyde d'aluminium dont la taille des particules est submicrométrique, et en ce que ledit élément de fermeture ou d'habillage est transparent vis-à-vis des longueurs d'onde du spectre optique visible.

En raison de la taille submicrométrique de ses particules, la poudre d'oxyde d'aluminium permet d'obtenir par frittage des pièces céramiques d'une grande résistance mécanique. La preuve en est que la Demanderesse est parvenue à réaliser, au moyen de cette céramique, non seulement des éléments de fermeture tels que fonds et verres pour montres, mais également des éléments d'habillage, notamment des maillons de bracelets, qui sont l'objet d'agressions extérieures bien plus fréquentes et plus marquées encore que celles auxquelles sont soumis lesdits éléments de fermeture.

D'autre part, on constate de façon surprenante que malgré la structure cristallographique hexagonale et donc biréfringente de l'oxyde d'aluminium, celui-ci est transparent quand il est réduit à l'état de poudre très fine et fritté. Pour une meilleure compréhension de ce phénomène, on se reportera utilement à la publication intitulée « Transparent Sintered Corundum with High Hardness and Strength » parue dans Journal of American Ceramic Society 86[1]12-18(2003) qui est incluse ici à titre de référence dans son intégralité.

Les éléments de fermeture et d'habillage selon l'invention se laissent également facilement polir dans la mesure où les grains du matériau céramique sont très fins.

Enfin, étant donnée la grande résistance mécanique des éléments réalisés conformément à l'invention, ceux-ci peuvent prendre une forme quelconque, par exemple à facettes, ou bien présenter des bords aigus sans que les arêtes ne constituent des zones d'amorce de fissures. D'autre part, leur épaisseur peut être réduite de moitié par rapport aux éléments de fermeture de l'art antérieur.

La présente invention concerne également une pièce d'horlogerie comprenant un élément de fermeture ou d'habillage selon l'invention.

D'autres caractéristiques et avantages de la présente invention ressortiront plus clairement de la description détaillée qui suit d'un exemple de réalisation d'éléments de fermeture et d'habillage pour une montre selon l'invention, cet exemple étant donné à titre purement illustratif et non limitatif seulement en liaison avec le dessin annexé sur lequel :
- la figure 1 est une vue schématique en perspective d'une boîte de montre dont les éléments d'habillage et de fermeture ont été réalisés au moyen d'une poudre d'oxyde d'aluminium conformément à la présente invention, et
- la figure 2 est une vue en perspective d'un verre de montre à facettes également réalisé en poudre d'aluminium submicrométrique.

La présente invention procède de l'idée générale inventive consistant à réaliser des éléments d'habillage ou de fermeture pour pièces d'horlogerie par frittage d'une poudre d'oxyde d'aluminium dont la taille des particules est submicrométrique. En choisissant une poudre à faible granulométrie, on garantit que la pièce frittée résultante aura une résistance mécanique élevée. D'autre part, on a constaté avec surprise que malgré la structure cristallographique hexagonale et donc biréfringente de l'oxyde d'aluminium, celui-ci est transparent lorsqu'il est réduit à l'état de poudre très fine et fritté. Grâce à l'emploi d'alumine submicrométrique, on obtient donc des éléments d'habillage ou de fermeture pour montres dont la transparence est remarquable et dont les propriétés mécaniques sont élevées.

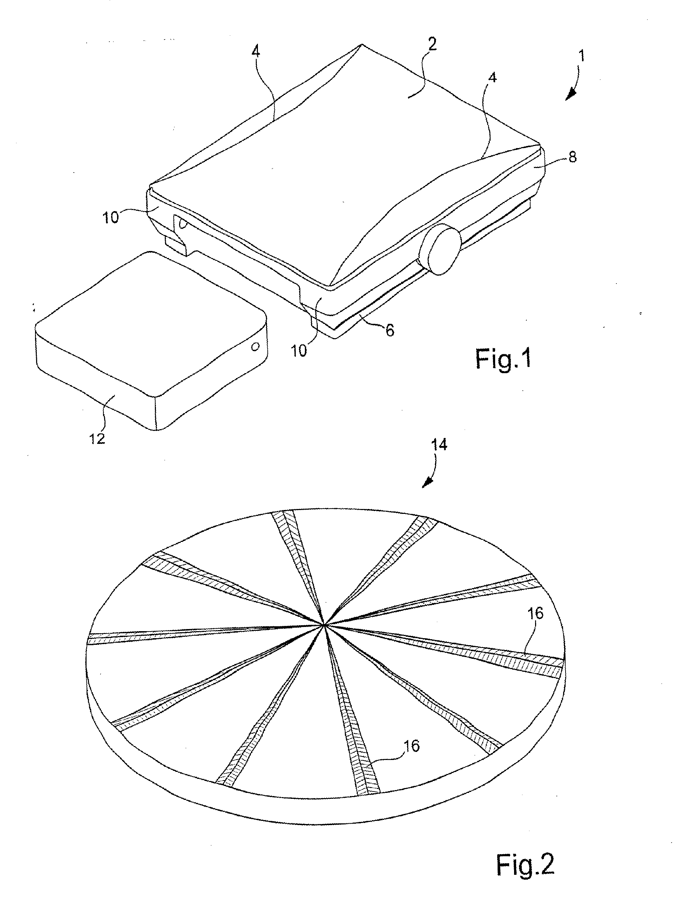

La figure 1 est une vue schématique en perspective d'une boîte de montre dont les éléments d'habillage et de fermeture ont été réalisés au moyen d'une poudre d'oxyde d'aluminium conformément à la présente invention.

Désignée dans son ensemble par la référence numérique générale 1, cette boîte de montre comprend un verre 2 qui recouvre et protège le cadran et les aiguilles non visibles au dessin.

Selon l'invention, l'élément de fermeture transparent que forme le verre 2 est un élément pratiquement inrayable réalisé par frittage d'une pièce brute ayant une forme générale semblable à celle du verre. La pièce brute est formée essentiellement à partir d'une poudre de matériau céramique et, le cas échéant, d'un liant et est polie après frittage pour présenter des caractéristiques de transparence vis-à-vis des longueurs d'onde du spectre optique visible.

Plus précisément, la poudre comprend essentiellement de l'oxyde d'aluminium. Le verre ainsi réalisé est bien entendu complètement transparent dans le spectre visible après frittage et protège les moyens d'affichage tout en permettant leur lecture.

La montre 1 munie d'un élément de fermeture transparent selon l'invention, dans l'exemple décrit le verre 2, est de la sorte particulièrement bien protégée contre les agressions extérieures.

Le verre 2 de la boîte de montre 1 présente deux arêtes 4 du côté de ses bords longitudinaux. Ces arêtes 4 sont prévues dans un but purement esthétique seulement, leur présence démontrant qu'il est possible, grâce à la présente invention, de réaliser des pièces aux formes complexes suffisamment résistantes du point de vue mécanique pour que leurs arêtes ne constituent pas des zones d'amorce de fissures.

Le fond 6 de la boîte de montre 1 constitue un autre élément de fermeture inrayable et transparent qui peut être réalisé conformément à l'invention. Comme dans le cas du verre 2, le fond 6 est réalisé par frittage d'une pièce brute ayant une forme générale semblable à celle dudit fond. La pièce brute est formée à partir d'une poudre d'oxyde d'aluminium dont la granulométrie est de l'ordre de 200 nanomètres. Après frittage, les grains du matériau céramique ont une taille de l'ordre de 500 nanomètres. Ces faibles dimensions des grains du matériau céramique fritté permettent un polissage aisé et procurent une grande résistance mécanique à la pièce résultante. En outre, on a constaté de façon tout à fait surprenante que, bien que l'alumine ait une structure cristallographique hexagonale et donc biréfringente, celle-ci est transparente lorsqu'elle est réduite à l'état de poudre très fine et frittée.

La présente invention permet de réaliser non seulement des éléments de fermeture d'une boîte de montre, mais également des éléments d'habillage tels que la carrure 8 représentée à la figure 1. En effet, du fait de la grande résistance mécanique des pièces frittées selon l'invention, on n'est nullement limité par les formes qu'il est possible de donner à ces pièces. On peut donc réaliser des pièces aux formes complexes telles que la carrure 8 qui est munie de quatre cornes 10 qui la prolongent dans le sens de sa longueur et qui permettent la fixation, par exemple d'un bracelet souple, dont seul un maillon 12, également réalisé en oxyde d'aluminium Al₂O₃ fritté conformément à l'invention, est représenté au dessin.

Ainsi, grâce à l'invention, on peut réaliser des éléments d'habillage pour montre qui sont l'objet d'agressions extérieures bien plus sévères encore que celles auxquelles sont soumis les éléments de fermeture.

La figure 2 est une vue en perspective d'un verre de montre à facettes 14 également réalisé en poudre d'alumine submicrométrique frittée. Les facettes du verre de montre 14 forment des arêtes vives 16 qui, en raison de la grande résistance mécanique des pièces frittées selon l'invention, ne constituent pas des zones d'amorce de fissures et peuvent donc tout à fait être envisagées par le concepteur de la montre.

On décrira succinctement ci-dessous les principales étapes du procédé de fabrication des pièces frittées selon l'invention. Pour une description plus complète, on se référera utilement à la publication mentionnée ci-avant.

On utilise des poudres brutes dont la taille des particules est de l'ordre de 200 nanomètres. Il est toutefois difficile d'obtenir une céramique dont la taille des grains est submicrométrique lorsque l'on recherche simultanément une densité résiduelle supérieure ou égale à 99,95 %. En effet, pour des céramiques transparentes à base d'alumine Al₂O₃, l'élimination de toute porosité résiduelle est de la plus grande importance car elle affecte la transparence.

On utilise une poudre de corindon dont la taille des particules est de l'ordre de 200 nm et dont le degré de pureté est supérieur à 99,99 %. On prépare des suspensions aqueuses auxquelles on peut ajouter 0,03 % en poids d'oxyde de magnésium MgO.

Pour certaines expériences, les échantillons sont dopés avec 0,2 % en poids d'oxyde de zirconium.

Les échantillons sont conformés par voie humide. Après moulage des suspensions, la solidification par polymérisation des additifs organiques est entreprise sous une température plus élevée (60°C).

Les éléments réalisés par moulage par voie humide sont séchés à l'air ambiant. Tous les éléments sont recuits dans l'air pour éliminer les composants organiques. Après frittage des échantillons, leur densité relative est portée à 96 % (c'est-à-dire 4 % de porosité fermée). Une densité supérieure à 99,9 % non mesurable par les techniques conventionnelles est finalement atteinte par compression isostatique à chaud sous une pression de 2000 bars dans une atmosphère d'argon et à des températures comprises entre 1150° et 1400°C.

Il va de soi que la présente invention n'est pas limitée au mode de réalisation qui vient d'être décrit, et que diverses modifications et variantes simples peuvent être envisagées par l'homme du métier sans sortir du cadre de la présente invention.

## Revendications

1. Elément de fermeture ou d'habillage transparent et inrayable pour une montre (1), cet élément étant réalisé par frittage d'une pièce brute ayant une forme générale semblable à celle de l'élément de fermeture (2, 6, 14) ou d'habillage (8, 12), ledit élément étant **caractérisé en ce que** la pièce brute est formée d'une poudre d'un matériau céramique comprenant essentiellement de l'oxyde d'aluminium Al₂O₃ dont la taille des particules est submicrométrique, et **en ce que** ledit élément de fermeture ou d'habillage est transparent vis-à-vis des longueurs d'onde du spectre optique visible.

2. Elément selon la revendication 1, **caractérisé en ce que** la taille des particules d'oxyde d'aluminium est inférieure ou égale à 0,2 microns.

3. Elément selon la revendication 2, **caractérisé en ce que**, après frittage, la taille des grains du matériau céramique est inférieure ou égale à 0,5 microns.

4. Elément selon l'une quelconque des revendications 1 à 3, **caractérisé en ce que** l'on rajoute à la poudre d'oxyde d'aluminium Al₂O₃ de l'oxyde de magnésium MgO.

5. Elément selon la revendication 4, **caractérisé en ce que** la poudre d'oxyde d'aluminium Al₂O₃ comprend 0,03 % en poids d'oxyde de magnésium MgO.

6. Elément selon l'une quelconque des revendications 1 à 5, **caractérisé en ce que** la poudre d'oxyde d'aluminium Al₂O₃ est dopée avec de l'oxyde de zirconium ZrO.

7. Elément selon la revendication 6, **caractérisé en ce que** la poudre d'oxyde d'aluminium Al₂O₃ comprend 0,2 % en poids d'oxyde de zirconium ZrO.

8. Elément selon l'une quelconque des revendications 1 à 7, **caractérisé en ce que** la densité du matériau céramique est supérieure à 99,9 %.

9. Montre-bracelet, **caractérisée en ce qu'**elle comprend un élément de fermeture ou d'habillage transparent et inrayable selon l'une quelconque des revendications 1 à 8.
